# EUROPÄISCHE PATENTSCHRIFT

(11) **EP 2 225 581 B1**
(45) Veröffentlichungstag und Bekanntmachung des Hinweises auf die Patenterteilung: **11.05.2016**
(21) Anmeldenummer: 08861931.7
(22) Anmeldetag: 18.12.2008
(51) Int. Cl.: G01S 7/02

(54) **VERFAHREN ZUM BETREIBEN EINES ELEKTRISCHEN GERÄTES SOWIE ELEKTRISCHES GERÄT**
METHOD FOR OPERATING AN ELECTRICAL DEVICE AND ELECTRICAL DEVICE
PROCÉDÉ DE FONCTIONNEMENT D'UN APPAREIL ÉLECTRIQUE ET APPAREIL ÉLECTRIQUE

(30) Priorität: 19.12.2007 DE 102007061383
(43) Veröffentlichungstag der Anmeldung: 08.09.2010
(73) Patentinhaber: Robert Bosch GmbH, 70442 Stuttgart (DE); HILTI Aktiengesellschaft, 9494 Schaan (LI)
(72) Erfinder: KRAPF, Reiner, 72770 Reutlingen (DE); BRAUN, Heiko, 70178 Stuttgart (DE); MAHLER, Michael, 70771 Leinfelden-Echterdingen (DE); WUERSCH, Christoph, 9470 Werdenberg (CH); KANEIDER, Wilfried, 6830 Rankweil-Brederis (AT); DUNGER, Hartmut, 70771 Leinfelden-Echterdingen (DE)
(86) Internationale Anmeldenummer: PCT/EP2008/067913
(87) Internationale Veröffentlichungsnummer: WO 2009/077595

(56) Entgegenhaltungen:
- EP-A- 1 983 353
- WO-A1-2005/116683
- US-A- 5 294 933
- US-A1- 2002 155 811
- US-A1- 2003 038 741
- US-A1- 2006 252 418
- US-A1- 2007 120 731
- US-A1- 2007 188 373
- US-B1- 6 456 231
- AMER NEZIROVIC ET AL: "Narrowband Interference Suppression in UWB Impulse Radar for Human Being Detection" ULTRA-WIDEBAND, 2007. ICUWB 2007. IEEE INTERNATIONAL CONFERENCE ON, IEEE, PI, 1. September 2007 (2007-09-01), Seiten 56-61, XP031159321 ISBN: 978-1-4244-0520-6
- MILLER T ET AL: "RFI suppression for ultra wideband radar" IEEE TRANSACTIONS ON AEROSPACE AND ELECTRONIC SYSTEMS, IEEE SERVICE CENTER, PISCATAWAY, NJ, US, Bd. 33, Nr. 4, 1. Oktober 1997 (1997-10-01), Seiten 1142-1156, XP011201192 ISSN: 0018-9251

## Beschreibung

### Stand der Technik

### Offenbarung der Erfindung

Die Erfindung geht aus von einem elektrischen Gerät in Form einer Vorrichtung zur Detektion von Objekten, einem Ortungsgerät und dabei einem Gerät mit zumindest einem Ultrabreitband (UWB) Sensor.

UWB-Sensorgeräte verwenden im Gegensatz zu bisherigen Schmalband-Radiodiensten einen sehr großen Frequenzbereich mit jedoch relativ geringer spektraler Leistungsdichte. Die Verwendung dieses großen Frequenzbereiches hat zur Folge, dass auch Frequenzbereiche überdeckt werden, die von vorhandenen Radiodiensten bereits verwendet werden. Aufgrund der niedrigen spektralen Leistungsdichte der UWB-Sensorgeräte und der Schmalbandigkeit der Empfänger der vorhandener Radiodienste ist das Störpotenzial der UWB-Sensorgeräte gering, hängt jedoch vom Abstand zwischen UWB-Sensorgerät und Schmalbandempfänger ab. Diese Störung kann dadurch bei den Radiodiensten als Rauschstörung angesehen werden. Bei geringem Abstand kann jedoch das Störpotenzial eine zulässige Grenze überschreiten und der Transmitter des UWB-Sensorgerätes muss zur Vermeidung einer Störung des Schmalbandgerätes abgeschaltet werden.

Verfahren zur Verwaltung einer RF-Spektrum-Nutzung durch zwei oder mehrere drahtlose Computernetzwerktechnologien, die in dem gleichen drahtlosen Kommunikationsumfeld arbeiten, sind aus der US 2006/252418 A1 bekannt. Aus WO 2005/116683 A1 ist ein Verfahren bekannt, das gepulste abgestrahlte Störsignaleinflüsse eliminiert, indem eine Abtastrate (Samplingrate) einer Empfangseinrichtung eines Hochfrequenzmessgeräts so angepasst wird, dass bei der Analog-Digital-Wandlung möglichst nur zwischen den Pulsen des oder der externen Störer gemessen wird.

Das Störpotenzial von aktiven Schmalbandgeräten auf UWB-Sensorgeräte ist in solchen Fällen vielfach erheblich größer, da die gesamte Energie des Schmalbandsenders vom Breitbandempfänger des UWB-Sensorgerätes empfangen wird. Dies führt mit abnehmendem Abstand zwischen beiden Geräten dazu, dass das UWB-Sensorgerät seine eigenen Signale nicht mehr empfangen kann und somit keine Funktion mehr möglich ist und das UWB-Gerät auf die Störung reagieren muss. UWB-Geräte genießen jedoch im Unterschied zu Radiodienste keinen Schutz vor Störung.

Geeignete Signalquellen eines UWB-Sensorgerätes sind z.B.:
- Impulsfolge
- Pseudo-Noise-(PN-)Folgen
- Frequency Modulated Continuous Wave (FMCW)
- Stepped Frequency Continuous Wave (SFCW)
- Frequency-Shift-System

Die Erzeugung von Pulsfolgen kann durch Dioden (z.B. SR-Diode), einen Transistor oder eine Transistorschaltung erfolgen. Pseudo-Noise-Folgen können durch rückgekoppelte Schieberegister (z.B. diskreter Aufbau aus Gattern, Implementierung in FPGA, Digitalchip) oder Lookup-Tabelle bzw. Speicher erzeugt werden. Die Verfahren zur Signalerzeugung entsprechen dem Stand der Technik.

Das FMCW- und Frequency-Shift Verfahren ist ein in der Radartechnik gängiges Verfahren. Hier wird auf einer Trägerfrequenz ein moduliertes Signal überlagert. Dieses modulierte Signal stellt gleichzeitig das Messsignal dar und wird nach dem Empfang mit Hilfe eines Mischers zurück gewonnen.

Aus der DE 10 2006 025 861 A1 ist ein elektrisches Gerät, insbesondere ein Ortungsgerät zur Ortung von Objekten in einem Untersuchungsgegenstand bekannt, welches einen Radarsensor zur Ortung von in einem Medium eingeschlossenen Objekten nutzt.

Die US 5 294 933 offenbart ein breitbandiges Radargerät, welches Mittel aufweist, um den Einfluss externer Störer auf das gemessene Signal des Radargerätes zu minimieren. Über das bekannte "Zeit-Bandbreite Produkt" der von der Vorrichtung der US 5 294 933 ausgesendeten Impulse wird der Einfluss eines externen Störers vermessen, um die Messdaten des Radargerätes in entsprechender Weise zu korrigieren.

### Aufgabe der Erfindung

Ziel der Erfindung ist es, Ortungsgeräte neben Radiodiensten betreiben zu können und die störenden elektromagnetischen Wechselwirkungen der Geräte und Dienste untereinander gering zu halten oder zu vermeiden. Als Radiodienste werden im Rahmen der Erfindung externe Hochfrequenzsignale und entsprechende Funkdienste, wie beispielsweise Mobilfunksysteme, verstanden.

### Vorteile der Erfindung

Das erfindungsgemäße Gerät besitzt zumindest einen Ultrabreitbandsensor (UWB-Sensor), insbesondere einen Utrabreitbandradarsensor. Unter einem UWB-Sensor bzw. einem "Ultrabreitbandradarsensor" bzw. einer UWB-Antenne soll in diesem Zusammenhang ein Sensor, insbesondere ein Radarsensor bzw. eine Antenne verstanden werden, mittels denen ein ultrabreitbandiges elektromagnetisches Signal insbesondere ein solches Radarsignal erzeugt, bzw. gesendet und/oder empfangen und/oder ausgewertet werden kann. Unter einem "ultrabreitbandigen (oder Ultra Wide Band oder UWB) Radarsignal" soll dabei insbesondere ein elektromagnetisches Signal verstanden werden, welches einen Nutzfrequenzbereich mit einer Mittenfrequenz im Frequenzbereich von 1 GHz bis 15 GHz und einer Frequenzbandbreite von zumindest 500 MHz aufweist.

Bei dem erfindungsgemäßen Verfahren, bzw. einen nach diesem Verfahren arbeitenden elektrischen Gerät wird vor oder während dem Aussenden eines Funksignals (z.B. Radarsignal eines Ortungsgerätes) oder in einer Sendepause nach potentiellen Störern oder durch das Funksignal möglicherweise gestörte Radiodienste gesucht. Dies geschieht indem der relevante Nutzfrequenzbereich des UWB-Ortungsgeräts nach aktiven Radiodiensten abgesucht wird. Ist kein aktiver Radiodienst in der Nähe, kann das Ortungsgerät sein Sendesignal mit voller (erlaubter) Leistung senden, während im Falle eines störenden Radiodienstes Maßnahmen ergriffen werden müssen, um einerseits den Radiodienst während dessen Empfangsphase nicht zu stören und andererseits den Einfluss des bevorrechtigten Radiodienstes auf den Messvorgang des betrachteten Ortungsgerätes durch eine geeignete Maßnahme zu begegnen.

Durch eine geeignete Schwellwerteinstellung kann der Grad der Schutzfunktion auf die Bedürfnisse/Anforderungen der beteiligten Geräte eingestellt werden.

Die Vorteile der Erfindung sind ein maximal ungestörter Messbetrieb des nicht bevorrechtigten Ortungsgerätes und minimal gestörte bevorrechtigte Radiodienste während der gleichzeitigen Benutzung eines Frequenzspektrums.

Weitere Vorteile des erfindungsgemäßen Verfahrens und mittels dieses Verfahrens justierter elektro-optischer Vorrichtungen ergeben sich aus den nachfolgenden Zeichnungen sowie der zugehörigen Beschreibung.

### Zeichnung

In der Zeichnung ist eine typische Anwendungssituation, sowie ein Ausführungsbeispiel des erfindungsgemäßen Verfahrens dargestellt. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

Es zeigt:
- Figur 1: eine dem erfindungsgemäßen Verfahren zugrunde liegende Mess-situation,
- Figur 2: ein Ausführungsbeispiel des erfindungsgemäßen Verfahrens in einer schematischen Darstellung.

### Beschreibung eines Ausführungsbeispiels

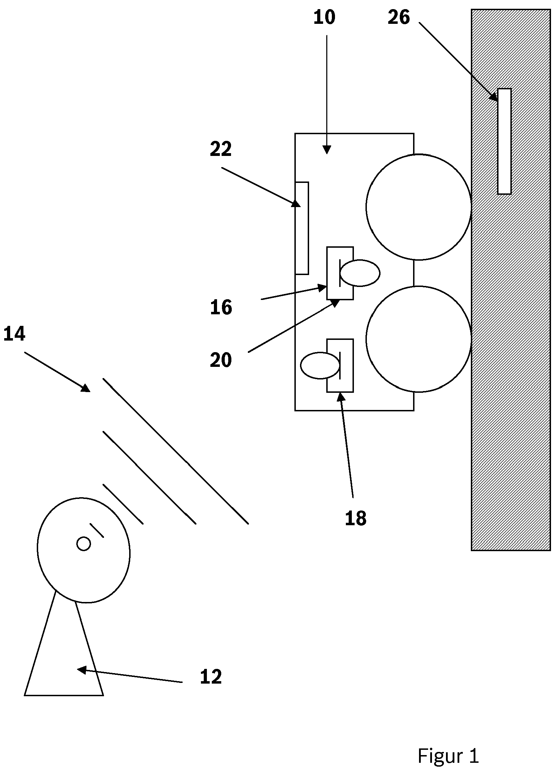

Figur 1 zeigt eine typische Anwendungssituation, die dem erfindungsgemäßen Verfahren zugrunde liegt. Ein elektrischen Gerätes 10 in Form eines Ortungsgerät zur Erkennung von Objekten 26 in einem Medium, wie beispielsweise einer Wand, einem Boden einer Decke oder einem Baustoff, welches im Betrieb zumindest zeitweise elektromagnetische Strahlung in Hochfrequenzbereich d.h. Frequenzen im Bereich von ca. 1 GHz bis ca. 20 GHz, aussendet, wird in der Nähe eines Radiodienstes 12, wie beispielsweise einem Sender, einer externen Strahlungsquelle, einem externen Funkdienst oder einem Radioteleskop betrieben.

Dabei kann das elektrisches Gerät von dem Radiodienst gestört werden oder diesen selbst stören. Beide Wechselwirkungen gilt es zu verhindern. Die Erkennung des Radiodienstes kann prinzipiell vor oder während des Aussendens eines Funksignals durch das elektrische Gerät oder in einer Sendepause des Gerätes erfolgen.

Das elektrische Gerät 10 besitzt eine Detektionseinheit 20 mit einer UWB-Antenne 16 zur Aussendung (sender) und Detektion (Empfänger) eines Messsignals, um beispielsweise in einem Medium eingeschlossene Objekte zu detektieren. Alternativerweise können Sende- und Empfangsantenne der Mess- und Detektionseinheit 20 auch getrennt sein. Darüber hinaus besitzt das Gerät 10 gemäß der Ausführungsform der Figur 1 zumindest noch einen zusätzlichen, eigenen Empfänger 18 für die Detektion der von einem Radiodienst 12, wie beispielsweise einer externe Strahlungsquelle, einem externen Funkdienst oder einem Radioteleskop ausgesendeten Strahlung. In alternativen Ausführungsformen kann eine Detektion des externen Radiodienstes auch über die Antenne 16 der Mess- oder Detektionseinheit 20 zur Detektion von eingeschlossenen Objekten erfolgen.

Das erfindungsgemäße Verfahren ermöglicht nun den störungsfreien Betrieb des elektrischen Gerätes.

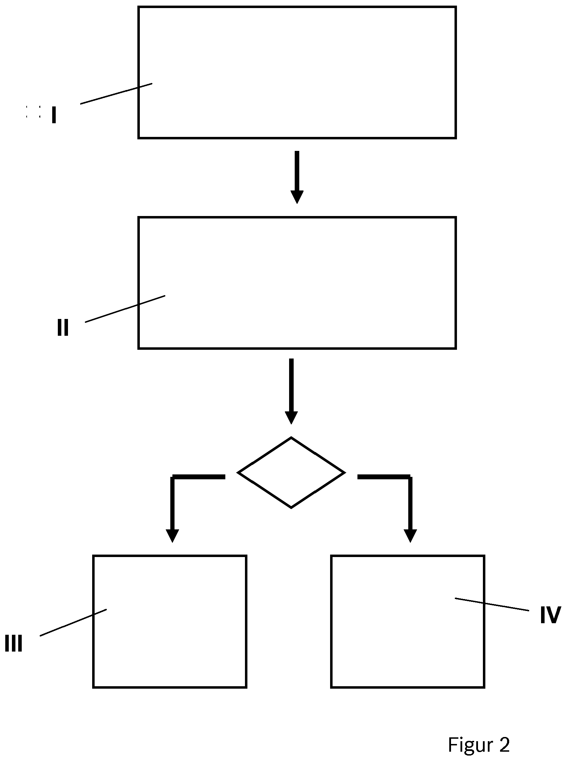

Bei dem erfindungsgemäßen Verfahren, bzw. dem nach diesem Verfahren arbeitenden elektrischen Gerät 10 wird beispielsweise nach dem Einschalten des Gerätes (Verfahrenschritt I in Figur 2) aber vor oder während des Aussendens eines Funksignals (z.B. Radarsignal eines Ortungsgerätes) oder in einer Sendepause des Senders der Detektionseinheit 20 nach potentiellen Störern 12 oder durch das Funksignal möglicherweise gestörte Radiodienste gesucht (siehe Verfahrensschritt II in Figur 2).

Dies geschieht beispielsweise dadurch, dass der relevante Nutzfrequenzbereich des UWB-Ortungsgeräts nach aktiven Radiodiensten 12 abgesucht wird. Ist kein aktiver Radiodienst in der Nähe, kann das Ortungsgerät sein Sendesignal mit voller (erlaubter) Leistung senden (Verfahrensschritt III gemäß Figur 2), während im Falle eines störenden Radiodienstes 12 Maßnahmen ergriffen werden müssen, um einerseits den Radiodienst während dessen Empfangsphase nicht zu stören und andererseits den Einfluss des bevorrechtigten Radiodienstes auf den Messvorgang des betrachteten Ortungsgerätes durch eine geeignete Maßnahme zu begegnen (Verfahrensschritt IV in Figur 2). Die kann beispielsweise eine Reduzierung der Sendeleistung des elektrischen Gerätes oder aber auch eine zeitweise Abschaltung des Senders des elektrischen Gerätes sein.

Im folgenden soll auf die unterschiedlichen Erkennungsmodi für einen Radiodienst eingegangen werden, wie sie im erfindungsgemäßen Verfahren genutzt werden könen.

### A) Erkennung eines Radiodienstes während des Sendens

Ist ein Radiodienst 12 in der Nähe des Ortungsgeräts 10 aktiv während dieses sendet, so empfängt das Ortungsgerät 10 beispielsweise mit der Antenne 16 seiner Detektionseinheit 20 eine Überlagerung seines eigenen (reflektierten) Sendesignals mit einem Signal 14 des Radiodienstes 12. Die Anwesenheit des Radiodienstes 12 kann dadurch erkannt werden, dass das Empfangsspektrum des Ortungsgerätes gegenüber dem Normalfall ohne Radiodienst 12 in seiner Form stark verändert ist. Der Grund dafür ist insbesondere, dass der Radiodienst 12 in einem schmalen Frequenzbereich sehr viel Leistung zum Empfangsspektrum addiert.

Das Referenzspektrum, mit dem das aktuelle Empfangsspektrum verglichen wird, kann dabei auf unterschiedliche Arten erhalten werden:
a) fest im Gerät gespeichert
b) durch Mittelung des Empfangssignals über einen längeren Zeitraum evtl. mit Ausblendung von Extremwerten, die z.B. durch Störer entstehen
c) durch ein internes Referenznetzwerk (z.B. Kurzschluss), der das Sendesignal intern reflektiert und dieses dadurch in den Empfangszweig gelangt. Dabei ist es vorteilhaft, vor dem Kurzschluss ein Dämpfungsglied einzubauen, um durch Fehlanpassung entstehende hin- und herlaufende Wellen zu dämpfen. Des Weiteren kann das erhaltene Ergebnis entsprechend umgerechnet werden, um evtl. unberücksichtigte Elemente (speziell Antennencharakteristik) zu berücksichtigen.

Eine weitere Möglichkeit ist, eigene Empfänger 18 für die zu beachtenden, externen Funkdienste einzusetzen, wie dies im Ausführungsbeispiel der Figur 1 dargestellt ist. Diese Empfänger 18 sind dann in der Lage, beispielsweise schmalbandig, und mit großer Empfindlichkeit und Selektivität bestimmte Funkdienste zu erkennen.

Wurde ein Störer 12 erkannt, so kann die aktuelle Messung ab einem festgelegten Störgrad für ungültig erklärt werden. Der Anwender muss dann ggf. so lange über den gewünschten Messbereich fahren, bis für alle Ortspositionen ausreichend viele gültige Messungen aufgenommen wurden. Im Display des elektrischen Gerätes 10 oder mittels LEDs kann entsprechend angezeigt werden, ob der Messbereich nochmals zu überfahren ist. Alternativ können die Ortspositionen, für die nicht ausreichend viele gültige Werte vorliegen, im Display als ungültig angezeigt werden.

Eine weitere Möglichkeit der Störererkennung besteht durch Beobachtung der Veränderung des Frequenzspektrums während einer Messung bei stehendem (aber trotzdem sendendem) Gerät (konstante Ortsposition): Ändert sich das Spektrum bei bestimmten Frequenzen, Frequenzbändern oder die Gesamtamplitude, obwohl das Gerät nicht bewegt wird, so ist eine externe Störung anzunehmen.

### B) Suche nach Radiodiensten in Sendepausen

Einfacher als während des Sendens des elektrischen Gerätes 10 ist die Suche nach Radiodiensten 12 bei ausgeschaltete Sender der Detektionseinheit 20. Hierbei ist im einfachsten Fall eine Betrachtung der Empfangsleistung ausreichend. Es ist sinnvoll, vor dem Einschalten des Senders der Detektionseinheit 20 nach Radiodiensten 12 zu suchen. Während der Messung kann in regelmäßigen oder auch dynamischen Abständen der Sender der Detektionseinheit 20 abgeschaltet und nach Radiodiensten 12 gesucht werden, die evtl. vor Beginn des Sendens nicht vorhanden waren oder inzwischen nicht mehr vorhanden sind. Bei dynamischer Abstandsregelung kann der Abstand danach verändert werden, ob vorher bereits ein Radiodienst erkannt wurde oder nicht.

Weiterhin ist es sinnvoll, in Messpausen den Empfänger aktiviert zu lassen oder in regelmäßigen oder dynamischen Abständen zu aktivieren, um nach Radiodiensten in der Umgebung zu suchen. Eine Messpause kann z.B. auch dadurch zu Stande kommen, dass der Anwender mit dem Gerät einen Ort überfährt, bei dem bereits eine ausreichende Anzahl Messungen durchgeführt wurden.

Generell kann bei der Erkennung eines Radiodienstes dieses dem Benutzer des elektrischen Gerätes über ein Display, ein Geräusch oder durch Lichtsignale mitgeteilt bzw. angezeigt werden. Bei Erkennung eines bekannten Radiodienstes (z.B. UMTS-Mobiltelefon) kann der Anwender informiert werden, um was für einen Störer es sich handelt, um ggf. Gegenmaßnahmen einzuleiten (z.B. Handy ausschalten).

Dabei kann unterschieden werden zwischen dem Fall, dass der Messvorgang fortgesetzt werden kann und dem Fall, dass der Sender ausgeschaltet werden muss, um den Radiodienst nicht zu stören. In letzterem Fall ist es vorteilhaft, abhängig von der Benutzereinstellung den Empfänger eingeschaltet zu lassen und dem Benutzer mit Hilfe eines Signals (Licht, Geräusch) anzuzeigen, wenn es möglich ist, die Messung fortzusetzen.

## Patentansprüche

1. Verfahren zum Betreiben eines Ortungsgerätes (10) zur Erkennung von Objekten (26) in einem Medium, welches im Betrieb zumindest zeitweise elektromagnetische Strahlung mittels eines Ultrabreitband Sensors aussendet, wobei das Vorhandensein einer externen Strahlungsquelle (12) oder eines externen Funkdienstes (12) detektiert wird, und in Abhängigkeit des detektierten Signals (14) der externen Strahlungsquelle oder des externen Funkdienstes (12) der Betrieb des Ortungsgeräts (10) modifiziert wird, **dadurch gekennzeichnet, dass**...
- das Ortungsgerät (10) sein Sendesignal mit voller Leistung sendet im Falle, dass kein Vorhandensein einer externen Strahlungsquelle (12) oder eines externen Funkdienstes (12) detektiert wird, und
- eine Reduzierung der Sendeleistung des Ortungsgeräts (10) durchgeführt wird im Falle, dass das Vorhandensein einer externen Strahlungsquelle (12) oder eines externen Funkdienstes (12) detektiert wird.

2. Verfahren nach Anspruch 1, **dadurch gekennzeichnet, dass** das Vorhandensein einer externen Strahlungsquelle oder des externen Funkdienstes (12) mit Hilfe der Empfangsantenne (16) des Ortungsgerätes (10) detektiert wird.

3. Verfahren nach Anspruch 1 oder 2, **dadurch gekennzeichnet, dass** die Anwesenheit der externen Strahlungsquelle oder des externen Funkdienstes (12) durch das aufgrund der externen Strahlungsquelle oder des externen Funkdienstes (12) veränderte Empfangsspektrum des Ortungsgerätes (10) detektiert wird.

4. Verfahren nach Anspruch 1, **dadurch gekennzeichnet, dass** die Anwesenheit der externen Strahlungsquelle oder des externen Funkdienstes (12) durch zumindest einen zusätzlichen, eigenen Empfänger (18) für eine externe Strahlungsquelle oder einen externen Funkdienst (12) detektiert wird.

5. Verfahren nach einem der vorhergehenden Ansprüche, **dadurch gekennzeichnet, dass** zur Detektion einer externen Strahlungsquelle oder eines externen Funkdienstes (12) ein Vergleich zumindest zweier Frequenzspektren durchgeführt wird.

6. Verfahren nach Anspruch 5, **dadurch gekennzeichnet, dass** zumindest ein aktuelles Empfangsspektrum des Ortungsgerätes (10) im Betrieb mit einem Referenzspektrum verglichen wird.

7. Verfahren nach Anspruch 6, **dadurch gekennzeichnet, dass** das Referenzspektrum, mit dem das aktuelle Empfangsspektrum des Ortungsgerätes (10) verglichen wird, im Ortungsgerät (10) gespeichert ist.

8. Verfahren nach Anspruch 7, **dadurch gekennzeichnet, dass** das Referenzspektrum, mit dem das aktuelle Empfangsspektrum des Ortungsgerätes (10) verglichen wird, durch Mittelung des Empfangssignals des Ortungsgerätes (10) über einen längeren Zeitraum erzeugt wird.

9. Verfahren nach Anspruch 8, **dadurch gekennzeichnet, dass** das Referenzspektrum, mit dem das aktuelle Empfangsspektrum des Ortungsgerätes (10) verglichen wird, durch Mittelung des Empfangssignals des Ortungsgerätes (10) über einen längeren Zeitraum, erzeugt wird, wobei Extremwerten, die durch externe Strahlungsquelle oder den externen Funkdienst entstehen, ausgeblendet werden.

10. Verfahren nach Anspruch 6, **dadurch gekennzeichnet, dass** das Referenzspektrum, mit dem das aktuelle Empfangsspektrum des Ortungsgerätes (10) verglichen wird durch ein internes Referenznetzwerk des Ortungsgerätes (10) erzeugt wird.

11. Verfahren nach Anspruch 1 oder 2, **dadurch gekennzeichnet, dass** die Anwesenheit der externen Strahlungsquelle oder des externen Funkdienstes (12) bei ausgeschaltetem Sender der Detektionseinheit (20) des Ortungsgerätes (10) detektiert wird.

12. Verfahren nach Anspruch 11, **dadurch gekennzeichnet, dass** die Empfangsleistung des Ortungsgerätes (10) gemessen wird.

13. Verfahren nach Anspruch 1 oder 2, **dadurch gekennzeichnet, dass** die Anwesenheit der externen Strahlungsquelle oder des externen Funkdienstes (12) dadurch detektiert wird, dass während einer Messung zur Ortung von in einem Medium eingeschlossenen Objekten in regelmäßigen oder auch dynamischen Abständen der Sender der Detektionseinheit (20) des Ortungsgerätes (10) abgeschaltet wird und nach externen Strahlungsquellen oder externen Funkdienste (12) gesucht wird.

14. Verfahren nach einem der vorhergehenden Ansprüche, **dadurch gekennzeichnet, dass** bei der Erkennung einer externen Strahlungsquelle oder eines externen Funkdienstes (12) dieses dem Benutzer übermittelt wird.

15. Verfahren nach Anspruch 14, **dadurch gekennzeichnet, dass** das Vorhandensein einer externen Strahlungsquelle oder eines externen Funkdienstes (12) dem Benutzer über ein Display (22) und/oder akustisch mitgeteilt wird.

16. Ortungsgerät (10) zur Detektion von in eine Medium eingeschlossenen Objekten mit zumindest einem UWB-Sensor, betrieben mit einem Verfahren nach zumindest einem der Ansprüche 1 bis 15.

## Claims

1. Method for operating a locating device (10) for identifying objects (26) in a medium, which locating device, during operation, emits electromagnetic radiation by means of an ultrawideband sensor at least some of the time, wherein the presence of an external radiation source (12) or an external radio service (12) is detected and the operation of the locating device (10) is modified in a manner dependent on the detected signal (14) of the external radiation source or the external radio service (12), **characterized in that**...
- the locating device (10) transmits the transmission signal thereof at full power in the case where no presence of an external radiation source (12) or an external radio service (12) is detected and
- there is a reduction in the transmission power of the locating device (10) in the case where the presence of an external radiation source (12) or an external radio service (12) is detected.

2. Method according to Claim 1, **characterized in that** the presence of an external radiation source or the external radio service (12) is detected with the aid of the reception antenna (16) of the locating device (10).

3. Method according to Claim 1 or 2, **characterized in that** the presence of the external radiation source or the external radio service (12) is detected by the reception spectrum of the locating device (10), which is modified on account of the external radiation source or the external radio service (12).

4. Method according to Claim 1, **characterized in that** the presence of the external radiation source or the external radio service (12) is detected by at least one additional, dedicated receiver (18) for an external radiation source or an external radio service (12).

5. Method according to one of the preceding claims, **characterized in that** a comparison of at least two frequency spectra is carried out for detecting an external radiation source or an external radio service (12).

6. Method according to Claim 5, **characterized in that** at least one current reception spectrum of the locating device (10) is compared to a reference spectrum during operation.

7. Method according to Claim 6, **characterized in that** the reference spectrum, to which the current reception spectrum of the locating device (10) is compared, is stored in the locating device (10).

8. Method according to Claim 7, **characterized in that** the reference spectrum, to which the current reception spectrum of the locating device (10) is compared, is generated by averaging the reception signal of the locating device (10) over a relatively long period of time.

9. Method according to Claim 8, **characterized in that** the reference spectrum, to which the current reception spectrum of the locating-device (10) is compared, is generated by averaging the reception signal of the locating device (10) over a relatively long period of time, wherein extremal values, which are created by the external radiation source or the external radio service, are masked.

10. Method according to Claim 6, **characterized in that** the reference spectrum, to which the current reception spectrum of the locating device (10) is compared, is generated by an internal reference network of the locating device (10).

11. Method according to Claim 1 or 2, **characterized in that** the presence of the external radiation source or the external radio service (12) is detected when the transmitter of the detection unit (20) of the locating device (10) is switched off.

12. Method according to Claim 11, **characterized in that** the reception power of the locating device (10) is measured.

13. Method according to Claim 1 or 2, **characterized in that** the presence of the external radiation source or the external radio service (12) is detected by virtue of the transmitter of the detection unit (20) of the locating device (10) being switched off at regular or else dynamic intervals during a measurement for detecting objects enclosed in a medium and a search being carried out for external radiation sources or external radio services (12).

14. Method according to one of the preceding claims, **characterized in that**, if an external radiation source or an external radio service (12) is identified, this is conveyed to the user.

15. Method according to Claim 14, **characterized in that** the presence of an external radiation source or an external radio service (12) is communicated to the user by way of a display (22) and/or acoustically.

16. Locating device (10) for detecting objects enclosed in a medium, comprising at least one UWB sensor, operated by way of a method according to at least one of Claims 1 to 15.

## Revendications

1. Procédé de mise en fonctionnement d'un appareil de localisation (10) destiné à identifier des objets (26) dans un milieu, lequel appareil, lors du fonctionnement, émet au moins par instants un rayonnement électromagnétique au moyen d'un capteur à bande ultralarge, dans lequel la présence d'une source de rayonnement externe (12) ou d'un service radio externe (12) est détectée et dans lequel le fonctionnement de l'appareil de localisation (10) est modifié en fonction du signal détecté (14) de la source de rayonnement externe ou du service radio externe (12), **caractérisé en ce que**
- l'appareil de localisation (10) émet son signal d'émission à puissance maximale dans le cas où la présence d'une source de rayonnement externe (12) ou d'un service radio externe (12) n'est pas détectée, et
- la puissance d'émission de l'appareil de localisation (10) est réduite dans le cas où la présence d'une source de rayonnement externe (12) ou d'un service radio externe (12) est détectée.

2. Procédé selon la revendication 1, **caractérisé en ce que** la présence d'une source de rayonnement externe ou du service radio externe (12) est détectée à l'aide des antennes de réception (16) de l'appareil de localisation (10).

3. Procédé selon la revendication 1 ou 2, **caractérisé en ce que** la présence de la source de rayonnement externe ou du service radio externe (12) est détectée par l'intermédiaire de la modification par la source de rayonnement externe ou du service radio externe (12) du spectre de réception de l'appareil de localisation (10).

4. Procédé selon la revendication 1, **caractérisé en ce que** la présence de la source de rayonnement externe ou du service radio externe (12) est détectée par l'intermédiaire d'au moins un récepteur propre supplémentaire (18) pour une source de rayonnement externe ou un service radio externe (12).

5. Procédé selon l'une quelconque des revendications précédentes, **caractérisé en ce que**, pour détecter une source de rayonnement externe ou un service radio externe (12), une comparaison est effectuée entre au moins deux spectres de fréquences.

6. Procédé selon la revendication 5, **caractérisé en ce qu'**au moins un spectre de réception actuel de l'appareil de localisation (10) est comparé lors du fonctionnement à un spectre de référence.

7. Procédé selon la revendication 6, **caractérisé en ce que** le spectre de référence avec lequel le spectre de réception actuel de l'appareil de localisation (10) est comparé est stocké dans l'appareil de localisation (10).

8. Procédé selon la revendication 7, **caractérisé en ce que** le spectre de référence avec lequel le spectre de réception actuel de l'appareil de localisation (10) est comparé est généré par moyennage du signal de réception de l'appareil de localisation (10) sur un intervalle de temps prolongé.

9. Procédé selon la revendication 8, **caractérisé en ce que** le spectre de référence avec lequel le spectre de réception actuel de l'appareil de localisation (10) est comparé est généré par moyennage du signal de réception de l'appareil de localisation (10) sur un intervalle de temps prolongé, dans lequel des valeurs extrêmes qui sont dues à la source de rayonnement externe ou au service radio externe sont masquées.

10. Procédé selon la revendication 6, **caractérisé en ce que** le spectre de référence avec lequel le spectre de réception actuel de l'appareil de localisation (10) est comparé est généré par un réseau de référence interne de l'appareil de localisation (10).

11. Procédé selon la revendication 1 ou 2, **caractérisé en ce que** la présence de la source de rayonnement externe ou du service radio externe (12) est détectée lorsque l'émetteur de l'unité de détection (20) de l'appareil de localisation (10) est désactivé.

12. Procédé selon la revendication 11, **caractérisé en ce que** la puissance de réception de l'appareil de localisation (10) est mesurée.

13. Procédé selon la revendication 1 ou 2, **caractérisé en ce que** la présence de la source de rayonnement externe ou du service radio externe (12) est détectée, **en ce que**, pendant une mesure destinée à localiser des objets inclus dans un milieu, à des intervalles réguliers ou également dynamiques, l'émetteur de l'unité de détection (20) de l'appareil de localisation (10) est désactivé et **en ce que** des sources de rayonnement externes ou des services radio externes (12) sont ensuite recherchés.

14. Procédé selon l'une quelconque des revendications précédentes, **caractérisé en ce que**, lors de l'identification d'une source de rayonnement externe ou d'un service radio externe (12), cette identification est indiquée à l'utilisateur.

15. Procédé selon la revendication 14, **caractérisé en ce que** la présence d'une source de rayonnement externe ou d'un service radio externe (12) est communiquée à l'utilisateur par l'intermédiaire d'un afficheur (22) et/ou de manière acoustique.

16. Appareil de localisation (10) destiné à détecter des objets inclus dans un milieu au moyen d'au moins un capteur UWB, mis en fonctionnement par un procédé selon au moins l'une des revendications 1 à 15.
